# EUROPEAN PATENT APPLICATION

(11) **EP 4 796 390 A1**
(43) Date of publication of application: **26.08.2026**
(21) Application number: 26156280.5
(22) Date of filing: 04.02.2026
(51) Int. Cl.: B60R 16/02, H01B 7/08, H01B 7/40

(54) **VEHICLE WIRING APPARATUSES**

(30) Priority: 20.02.2025 US 202519058091
(71) Applicant: Aptiv Manufacturing Management Services GmbH, 8200 Schaffhausen (CH)
(72) Inventor: SIEGFRIED, David G., 8200 Schaffhausen (CH); SUDIK JR., Joseph, 8200 Schaffhausen (CH); MICHAEL, Jeffrey, 8200 Schaffhausen (CH); PETERSON, David R., 8200 Schaffhausen (CH)
(74) Representative: Bardehle Pagenberg Partnerschaft mbB Patentanwälte Rechtsanwälte

(57) **Abstract**

A vehicle wiring apparatus includes a first non-conductive member, a second non-conductive member, and a conductor. The first non-conductive member includes a first receiving portion and first attachment portion. The second non-conductive member is bonded to the first non-conductive member and includes a second receiving portion and a second attachment portion coupled to the first attachment portion. The conductor extends in a first direction and is secured between the first receiving portion and the second receiving portion. The first attachment portion is disposed in a plane extending beyond an edge of the conductor. The first attachment portion is configured to receive a force applied in a direction transverse to the plane.

## Description

### FIELD

The present disclosure relates to vehicle wiring apparatuses and more particularly to apparatuses having a conductor disposed between non-conductive members.

### BACKGROUND

Modem vehicles (e.g., automobiles) rely on electrical wiring and electrical connections to facilitate communication between various electronic components within the vehicle. Wiring apparatuses play an important role in ensuring the integrity of these electrical connections and the reliability and performance of the vehicle. For example, vehicles experience vibrations, shifts, and various forces during operation. The wiring apparatuses secure the wiring to surfaces or components of a vehicle, reducing the risk of wear, pinching, or fraying, which can prevent potential electrical failures.

Current designs may be complex and expensive. For example, as vehicles become more advanced with integrated systems, the wiring setups become more complex. This complexity can increase both the cost of manufacturing and the cost of repairs. Further, in modem vehicles, space is often tight, and finding room for extensive wiring harnesses can be challenging. Improperly routed or bulky wiring can limit space for other components or reduce vehicle design flexibility. While known vehicle wiring apparatuses have proven acceptable for their intended purpose, there remains a continuous need for improvement to address the challenges related to the complexity, cost, and size constraints of current designs.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the disclosure provides a vehicle wiring apparatus. The vehicle wiring apparatus includes a first non-conductive member, a second non-conductive member, and a conductor. The first non-conductive member includes a first receiving portion and first attachment portion. The second non-conductive member is bonded to the first non-conductive member and includes a second receiving portion and a second attachment portion coupled to the first attachment portion. The conductor extends in a first direction and is secured between the first receiving portion and the second receiving portion. The first attachment portion is disposed in a plane extending beyond an edge of the conductor. The first attachment portion is configured to receive a force applied in a direction transverse to the plane.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of an example vehicle wiring apparatus in an assembled configuration in accordance with the principles of the present disclosure.
FIG. 2 is a perspective view of an example first member of a vehicle wiring apparatus in accordance with the principles of the present disclosure.
FIG. 3 is a perspective view of an example second member of a vehicle wiring apparatus in accordance with the principles of the present disclosure.
FIG. 4 is a perspective view of an example vehicle wiring apparatus in an assembled configuration in accordance with the principles of the present disclosure.
FIG. 5 is a flowchart depicting an example method of manufacturing a vehicle wiring apparatus in accordance with the principles of the present disclosure.

In the drawings, reference numbers may be reused to identify similar and/or identical elements.

### DETAILED DESCRIPTION

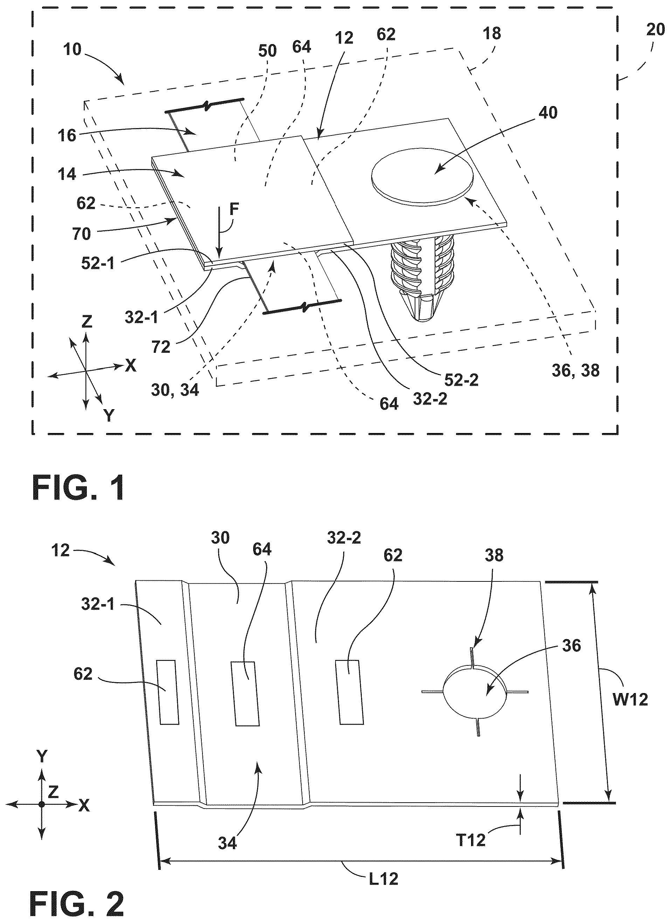

With reference to FIG. 1, an example vehicle wiring apparatus 10 is shown. In various implementations, the apparatus 10 includes a first non-conductive member 12, a second non-conductive member 14, and a conductor 16, among others. As will be explained in more detail below, in an assembled configuration, the first member 12 may be coupled to the second member 14 and the conductor 16. The second member 14 may be coupled to the first member 12 and the conductor 16. A portion of the conductor 16 may be disposed between the first and second members 12, 14. In various implementations, the apparatus 10 secures the conductor 16 to a portion 18 (e.g., a surface, a component, etc.) of a vehicle 20 (e.g., an automobile, etc.).

With reference to FIG. 2, an example first non-conductive member 12 is shown. The first member 12 may comprise one or more of a variety of shapes, sizes, configurations, and/or materials. In some implementations, the first member 12 is formed of a polypropylene strip. In various implementations, the first member 12 includes a first receiving portion 30, a first attachment portion 32-1, and a second attachment portion 32-2, among others. The first receiving portion 30 may receive a portion of the conductor 16. The first and second attachment portions 32-1, 32-2 may couple to portions of the second member 14. The receiving portion 30 may be disposed between the first and second attachment portions 32-1, 32-2.

In various implementations, the first member 12 defines a recess 34. The recess 34 may receive a portion of the conductor 16. In various implementations, the first member 12 defines an aperture 36 and at least one slot 38. The aperture 36 and the at least one slot 38 receive a fastener 40. In an assembled configuration, the fastener 40 may couple the apparatus 10 to the portion 18 of the vehicle 20. Alternative to the fastener 40, the apparatus 10 may include an adhesive disposed on at least a portion of a backside of the first member 12 or the second member 12 and the adhesive may be used to couple the apparatus 10 to the portion 18 of the vehicle 20.

In various implementations, the first member 12 defines a first length L12. The first member 12 defines a first width W12. The first member 12 defines a first thickness T12. The first length L12 may be variable (e.g., adjustable) and may be selected based on the application of the apparatus 10. In some instances, a digitally controlled machine (not shown) is used to cut the first member 12 to the first length L12.

In various implementations, the first member 12 comprises one or more plastic materials. The first member 12 may be rigid. For example, the first member 12 may be inhibited from bending or flexing under pressure or force. The first member 12 may have high resistance to deformation. For instance, the first member 12 may maintain its shape when subjected to external stresses. In various implementations, the first thickness T12 may be greater than or equal to a first threshold (e.g., 0.9 mm) so that the first member 12 is rigid. The first thickness T12 is greater than thicknesses of conventional tapes so that the first member 12 is more rigid in comparison with the tapes.

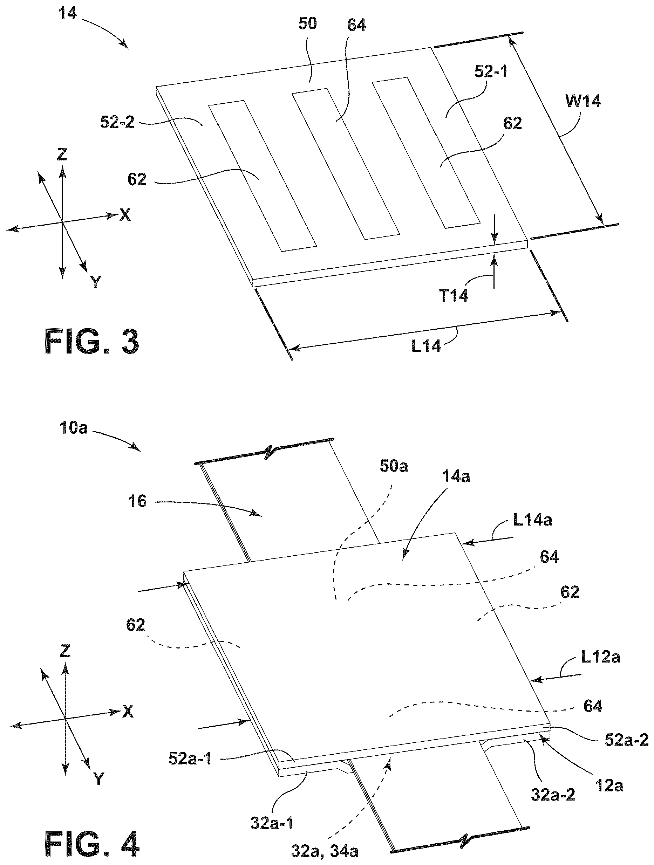

With reference to FIG. 3, an example second non-conductive member 14 is shown. The second member 14 may comprise one or more of a variety of shapes, sizes, configurations, and/or materials. In some implementations, the second member 14 is formed of a polypropylene strip. In various implementations, the second member 14 includes a second receiving portion 50, a first attachment portion 52-1, and a second attachment portion 52-2. The second receiving portion 50 may receive and/or may be coupled to a portion of the conductor 16. The first attachment portion 52-1 may couple to the first attachment portion 32-1 of the first member 12 and the second attachment portion 52-2 may couple to the second attachment portion 32-2 of the first member 12. The receiving portion 50 may be disposed between the first and second attachment portions 52-1, 52-2.

In various implementations, the second member 14 defines a second length L14. The second length L14 may be different than the first length L12. For example, the second length L14 may be less than the first length L12. The second length L14 may be variable (e.g., adjustable) and may be selected based on the application of the apparatus 10. In some instances, a digitally controlled machine (not shown) is used to cut the second member 14 to the second length L14.

The second member 14 defines a second width W14. The second width W14 may be identical to the first width W12. Alternatively, the second width W14 may be different than the first width W12.The second member 14 defines a second thickness T14. The second thickness T14 may be different that first thickness T12. For example, the second thickness T14 may be greater than the first thickness T12.

In various implementations, the second member 14 comprises one or more plastic materials. The second member 14 may be rigid. For example, the second member 14 may be inhibited from bending or flexing under pressure or force. The second member 14 may have high resistance to deformation. For instance, the second member 14 may maintain its shape when subjected to external stresses. In various implementations, the second thickness T14 may be greater than or equal to a second threshold (e.g., 1.2 mm) so that the second member 14 is rigid. In some examples, the second member 14 is more rigid in comparison with the first member 12.

With reference to FIGS. 1-3, in various implementations, the apparatus 10 includes an adhesive 62. The adhesive 62 may be coupled to one of the first member 12 or the second member 14. The adhesive 62 may be a tape that is coupled to at least a portion of the first member 12 or to at least a portion of the second member 14. The adhesive 62 may be applied to surfaces of the first and second members 12, 14. The adhesive 62 may secure the first member 12 to the second member 14.

In various implementations, the apparatus 10 includes an additional adhesive 64. The additional adhesive 64 may be coupled to the first member 12 and a portion of the conductor 16. The additional adhesive 64 may be coupled to the second member 14 and a portion of the conductor 16.

The additional adhesive 64 may be a tape that is coupled to at least a portion of the first member 12 or to at least a portion of the second member 14. The additional adhesive 64 may be applied to surfaces of the first and second members 12, 14. The additional adhesive 64 may be similar to the adhesive 62. Alternatively, the additional adhesive 64 may have at least one characteristic that is different than the adhesive 62.

Referring again to FIG. 1, the conductor 16 may comprise one or more of a variety of shapes, sizes, configurations, and/or materials. While the conductor 16 is generally shown and described herein as being a flat flexible cable, the conductor 16 may be a round flexible cable, a ribbon cable, a wire harness, or an optical fiber cable, among others.

In various implementations, in the assembled configurations, the second member 14 is bonded to the first member 12 (e.g., via one or more adhesives 62, 64). The conductor 16 may extend in a first direction (e.g., Y-direction) and may be secured between the first receiving portion 30 of the first member 12 and the second receiving portion 50 of the second member 14.

In various implementations, the first attachment portion 32-1 of the first member 12 is disposed in a plane 70 (e.g., in the X-direction) extending beyond an edge 72 of the conductor 16. The first attachment portion 32-1 may receive a force F applied in a direction (e.g., Z-direction) transverse to the plane 70. In various implementations, the first attachment portion 32-1 is disposed in the plane 70 while receiving the force F.

With reference to FIG. 4, an example vehicle wiring apparatus 10a is shown. In view of the similarity in structure and function of the apparatus 10a to the apparatus 10, like reference numerals are used hereinafter and in the drawings to identify like components while like reference numerals containing letter extensions (e.g., "a") are used to identify those components that have been modified.

In various implementations, the apparatus 10a includes a first non-conductive member 12a, a second non-conductive member 14a, and a conductor 16, among others. As will be explained in more detail below, in an assembled configuration, the first member 12a may be coupled to the second member 14a and the conductor 16. The second member 14a may be coupled to the first member 12a and the conductor 16. A portion of the conductor 16 may be disposed between the first and second members 12a, 14a.

In various implementations, the first member 12a defines a first length L12a. The second member 14a defines a second length L14a. The second length L14a may be identical to the first length L12a.

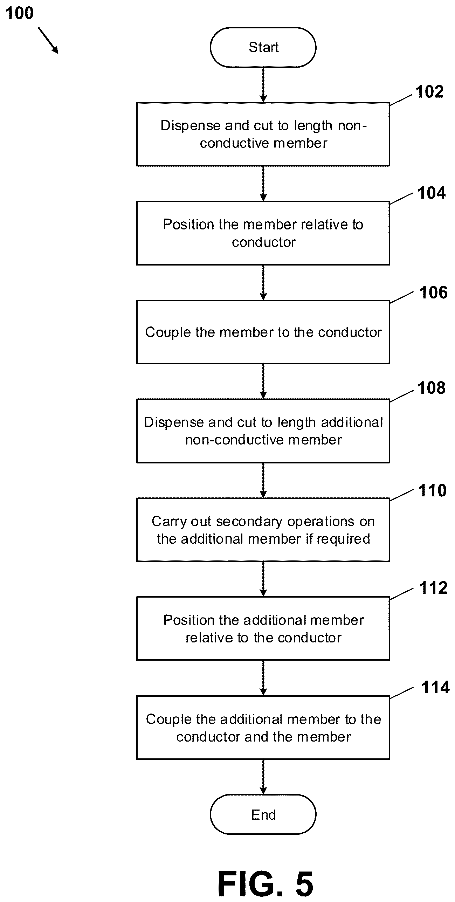

FIG. 5 is a flowchart of an example method 100 of manufacturing a vehicle wiring apparatus (e.g., vehicle wiring apparatus 10 or 10a). The method 100 may begin at 102. At 102, a non-conductive member (e.g., a first non-conductive member 12, 12a and/or a second non-conductive member 14, 14a) may be dispensed, for example, from a roll by a machine (not shown).

In some implementations, at 102, the method 100 also includes cutting, or otherwise separating the non-conductive member from the roll. The non-conductive member may be cut at a predetermined length (e.g., first length L12, L12a or second length L14, L14a). The non-conductive member may have a predetermined thickness (e.g., greater than or equal to 0.9 mm, etc.) and a predetermined width (e.g., greater than or equal to 19 mm, etc.).

The non-conductive member may be adhesive-backed. At 102, a cover of the adhesive (e.g., adhesive 62, 64) may be removed (e.g., by a machine, a robot, an operator, etc.) from the non-conductive member. The method 100 may proceed to 104.

At 104, the non-conductive member may be moved (e.g., by a machine, a robot, an operator, etc.) to a first predetermined position relative to a conductor (e.g., conductor 16). The method 100 may proceed to 106. At 106, the non-conductive member may be coupled to the conductor. For example, a force (e.g., in the Z-direction) may be applied to the non-conductive member and/or the conductor (e.g., by a machine, a robot, an operator, etc.) so that the adhesive secures the non-conductive member to the conductor. The method 100 may proceed to 108.

At 108, an additional non-conductive member (e.g., a first non-conductive member 12, 12a and/or a second non-conductive member 14, 14a) may be dispensed, for example, from a roll by a machine (not shown). In some implementations, at 108, the method 100 also includes cutting, or otherwise separating the additional non-conductive member from the roll. The additional non-conductive member may be cut at a predetermined length (e.g., first length L12, L12a or second length L14, L14a). The additional non-conductive member may have a predetermined thickness (e.g., greater than or equal to 1.6 mm, etc.) and a predetermined width (e.g., greater than or equal to 22 mm, etc.). The method 100 may proceed to 110.

At 110, one or more secondary operations may be carried out (e.g., by a machine, a robot, an operator, etc.) on the additional non-conductive member. For example, an aperture (e.g., aperture 36) and/or one or more slots (e.g., slots 38) may be added (e.g., punched, cut, drilled, etc.) to the additional member. Subsequently, a fastener (e.g., fastener 40) may be coupled to the additional member so that a portion of the fastener is disposed in the aperture. The additional non-conductive member may be adhesive-backed. At 110, a cover of the adhesive (e.g., adhesive 62, 64) may be removed (e.g., by a machine, a robot, an operator, etc.) from the additional non-conductive member. The method 100 may proceed to 112.

At 112, the additional non-conductive member may be moved (e.g., by a machine, a robot, an operator, etc.) to a second predetermined position relative to the conductor. For example, the second predetermined position may be on an opposite side of the conductor as the first predetermined position. The method 100 may proceed to 114. At 114, the additional non-conductive member may be coupled to the conductor and/or the non-conductive member. For example, one or more forces (e.g., in the Z-direction) may be applied to the additional member, the conductor, and/or the non-conductive member (e.g., by a machine, a robot, an operator, etc.) so that the adhesives secure the additional non-conductive member to the conductor and the non-conductive member. Then the method 100 may end.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "proximate," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for vehicle wiring apparatuses, as described above.

Clause 1: A vehicle wiring apparatus comprising: a first non-conductive member including a first receiving portion and first attachment portion; a second non-conductive member bonded to the first non-conductive member and including a second receiving portion and a second attachment portion coupled to the first attachment portion; and a conductor extending in a first direction and secured between the first receiving portion and the second receiving portion, the first attachment portion disposed in a plane extending beyond an edge of the conductor and configured to receive a force applied in a direction transverse to the plane.

Clause 2: The vehicle wiring apparatus of clause 1, wherein the first attachment portion is configured to be disposed in the plane while receiving the force.

Clause 3: The vehicle wiring apparatus of clause 1 or 2, further comprising an adhesive coupled to one of the first non-conductive member or the second non-conductive member and configured to secure the first non-conductive member to the second non-conductive member.

Clause 4: The vehicle wiring apparatus of clause 3, further comprising an additional adhesive, wherein the adhesive is coupled to the first non-conductive member and a first portion of the conductor, and wherein the additional adhesive is coupled to the second non-conductive member and a second portion of the conductor.

Clause 5: The vehicle wiring apparatus of any of clauses 1 through 4, wherein the first non-conductive member defines a first length and the second non-conductive member defines a second length, and wherein the second length is less than the first length.

Clause 6: The vehicle wiring apparatus of any of clauses 1 through 5, wherein the first non-conductive member defines a first thickness and the second non-conductive member defines a second thickness, and wherein the second thickness is greater than the first thickness.

Clause 7: The vehicle wiring apparatus of any of clauses 1 through 6, wherein the first non-conductive member defines a recess, and wherein the conductor is disposed within the recess.

Clause 8: The vehicle wiring apparatus of any of clauses 1 through 7, wherein the first non-conductive member defines an aperture configured to receive a fastener.

Clause 9: The vehicle wiring apparatus of clause 8, wherein the first non-conductive member defines at least one slot in fluid communication with the aperture.

Clause 10: The vehicle wiring apparatus of any of clauses 1 through 9, wherein the conductor is a flat flexible cable.

Clause 11: The vehicle wiring apparatus of any of clauses 1 through 10, wherein the vehicle wiring apparatus is configured to secure the conductor to a portion of a vehicle.

Clause 12: The vehicle wiring apparatus of any of clauses 1 through 11, wherein the first non-conductive member is rigid.

Clause 13: The vehicle wiring apparatus of any of clauses 1 through 12, wherein the second non-conductive member is rigid.

Clause 14: The vehicle wiring apparatus of any of clauses 1 through 13, wherein the first non-conductive member includes a third attachment portion, and wherein the first receiving portion is disposed between the first and third attachment portions.

Clause 15: The vehicle wiring apparatus of any of clauses 1 through 14, wherein the second non-conductive member includes a third attachment portion, and wherein the second receiving portion is disposed between the second and third attachment portions.

Clause 16: The vehicle wiring apparatus of any of clauses 1 through 15, wherein the first non-conductive member defines a first length and the second non-conductive member defines a second length, and wherein the second length is identical to the first length.

Clause 17: The vehicle wiring apparatus of any of clauses 1 through 16, wherein the first non-conductive member defines a first length and the second non-conductive member defines a second length, and wherein the second length is different than the first length.

Clause 18: The vehicle wiring apparatus of any of clauses 1 through 17, wherein the first non-conductive member defines a first width and the second non-conductive member defines a second width, and wherein the second width is different than the first width.

Clause 19: The vehicle wiring apparatus of any of clauses 1 through 18, wherein the first non-conductive member defines a first width and the second non-conductive member defines a second width, and wherein the second width is identical to the first width.

Clause 20: A vehicle comprising the vehicle wiring apparatus of any of clauses 1 through 19.

Clause 21: A method of manufacturing a vehicle wiring apparatus, the method comprising: dispensing a first non-conductive member; positioning the first non-conductive member on a first side of a conductor; dispensing the second non-conductive member; positioning the second non-conductive member on the conductor; and bonding the first non-conductive member to the second non-conductive member to secure the conductor between the first non-conductive member and the second non-conductive member such that first non-conductive member is disposed in a plane extending beyond an edge of the conductor and configured to receive a force applied in a direction transverse to the plane.

## Claims

1. A vehicle wiring apparatus (10, 10a) comprising:
a first non-conductive member (12, 12a) including a first receiving portion (30) and first attachment portion;
a second non-conductive member (14, 14a) bonded to the first non-conductive member (12, 12a) and including a second receiving portion (50) and a second attachment portion coupled to the first attachment portion; and
a conductor (16) extending in a first direction and secured between the first receiving portion (30) and the second receiving portion (50), the first attachment portion disposed in a plane (70) extending beyond an edge (72) of the conductor (16) and configured to receive a force applied in a direction transverse to the plane (70).

2. The vehicle wiring apparatus (10, 10a) of claim 1 wherein the first attachment portion is configured to be disposed in the plane (70) while receiving the force.

3. The vehicle wiring apparatus (10, 10a) of claim 1 or 2 further comprising an adhesive (62) coupled to one of the first non-conductive member (12, 12a) or the second non-conductive member (14, 14a) and configured to secure the first non-conductive member (12, 12a) to the second non-conductive member (14, 14a).

4. The vehicle wiring apparatus (10, 10a) of claim 3 further comprising an additional adhesive (64), wherein the adhesive (62) is coupled to the first non-conductive member (12, 12a) and a first portion of the conductor (16), and wherein the additional adhesive (64) is coupled to the second non-conductive member (14, 14a) and a second portion of the conductor (16).

5. The vehicle wiring apparatus (10, 10a) of any one of the preceding claims wherein the first non-conductive member (12, 12a) defines a first length and the second non-conductive member (14, 14a) defines a second length, and wherein the second length is less than the first length.

6. The vehicle wiring apparatus (10, 10a) of any one of the preceding claims wherein the first non-conductive member (12, 12a) defines a first thickness and the second non-conductive member (14, 14a) defines a second thickness, and wherein the second thickness is greater than the first thickness.

7. The vehicle wiring apparatus (10, 10a) of any one of the preceding claims wherein the first non-conductive member (12, 12a) defines a recess (34), and wherein the conductor (16) is disposed within the recess (34).

8. The vehicle wiring apparatus (10, 10a) of any one of the preceding claims wherein the first non-conductive member (12, 12a) defines an aperture (36) configured to receive a fastener (40),
wherein preferably the first non-conductive member (12, 12a) defines at least one slot in fluid communication with the aperture (36).

9. The vehicle wiring apparatus (10, 10a) of any one of the preceding claims wherein the conductor (16) is a flat flexible cable.

10. The vehicle wiring apparatus (10, 10a) of any one of the preceding claims wherein the vehicle wiring apparatus (10, 10a) is configured to secure the conductor (16) to a portion (18, 30, 50) of a vehicle (20).

11. The vehicle wiring apparatus (10, 10a) of any one of the preceding claims wherein the first non-conductive member (12, 12a) is rigid, and/or wherein the second non-conductive member (14, 14a) is rigid.

12. The vehicle wiring apparatus (10, 10a) of any one of the preceding claims wherein the first non-conductive member (12, 12a) includes a third attachment portion, and wherein the first receiving portion (30) is disposed between the first and third attachment portions (18, 30, 50),
and/or wherein the second non-conductive member (14, 14a) includes a third attachment portion, and wherein the second receiving portion (50) is disposed between the second and third attachment portions (18, 30, 50).

13. The vehicle wiring apparatus (10, 10a) of any one of the preceding claims wherein the first non-conductive member (12, 12a) defines a first length and the second non-conductive member (14, 14a) defines a second length, and wherein the second length is identical to the first length,
or wherein the first non-conductive member (12, 12a) defines a first length and the second non-conductive member (14, 14a) defines a second length, and wherein the second length is different than the first length.

14. The vehicle wiring apparatus (10, 10a) of any one of the preceding claims wherein the first non-conductive member (12, 12a) defines a first width and the second non-conductive member (14, 14a) defines a second width, and wherein the second width is different than the first width,
or wherein the first non-conductive member (12, 12a) defines a first width and the second non-conductive member (14, 14a) defines a second width, and wherein the second width is identical to the first width.

15. A vehicle (20) comprising the vehicle wiring apparatus (10, 10a) of any one of the preceding claims.
